# EUROPEAN PATENT SPECIFICATION

(11) **EP 3 671 987 B1**
(45) Date of publication and mention of the grant of the patent: **06.09.2023**
(21) Application number: 18214019.4
(22) Date of filing: 19.12.2018
(51) Int. Cl.: H02B 11/12, H02B 11/167, H02B 3/00, H02B 13/02

(54) **SWITCHGEAR WITH WITHDRAWABLE FEEDER MODULE**
SCHALTANLAGE MIT AUSZIEHBAREM EINZUGSMODUL
INSTALLATION DE COMMUTATION AVEC MODULE DE COMMUTATION AMOVIBLE

(43) Date of publication of application: 24.06.2020
(73) Proprietor: ABB Schweiz AG, 5400 Baden (CH)
(72) Inventor: Kozel, Tomas, 635 00 Brno (CZ); Javora, Radek, 664 62 Hrusovany u Brna (CZ); Cernohous, Josef, 561 65 Jamne nad Orlici (CZ)
(74) Representative: Maiwald GmbH

(56) References cited:
- WO-A1-2013/084572
- CN-A- 102 916 362
- CN-Y- 200 944 508
- DE-A1- 10 120 237
- RU-A- 2011 138 768
- Schneider: "Air Insulated Switchgear up to 24 kV Medium Voltage Distribution Catalogue I 2015", , 23 March 2015 (2015-03-23), pages 1-108, XP055585757, Retrieved from the Internet: URL:http://77.221.237.111/flipbooks/PIX_MC Set_Katalog_2015/content/PIX_MCSet_Katalog _2015.pdf [retrieved on 2019-05-06]

## Description

### FIELD OF THE INVENTION

The present invention relates to switchgear for low voltage, medium voltage or high voltage use with a substation.

### BACKGROUND OF THE INVENTION

Autonomous substations or switchgear systems require a robotic system for the whole substation in order to achieve a required level of autonomy.

WO2013/084572A1 describes that a switchgear has a breaker compartment and a cable compartment which are partitioned inside a switchgear case, and is equipped with: a breaker that is positioned inside the breaker compartment; and a truck that mounts the breaker when the trick is positioned inside the cable compartment, with the top surface of which forming a partition between the breaker compartment and the cable compartment in a condition wherein the truck is inserted in the cable compartment, or releasing the partition between the breaker compartment and the cable compartment in a condition wherein the truck is pulled out of the cable compartment.

CN200944508Y discloses another similar arrangment with a truck-mounted withdrawable circuit breaker in which the truck can be fully removed from the switchgear and in which the racking of the circuit breaker is independent from the movement of the truck. In this case, the operation of the truck and the racking device is also performed manually by an operator.

US 2017/0085064 A1 describes local equipment room (LER) for use in an industrial facility, having one or more robots to perform certain tasks, and LER being filled with non-atmospheric fluid or gas.

Such robotic systems operate with the substation or switchgear and perform both monitoring and maintenance tasks. Such robotic system can be quite complex and expensive, especially when considering variability existing in substations today. Even though robotic system can reduce maintenance tasks in a substation with respect to switchgear, the robot itself may require considerable maintenance. This can require the robot to be removed from the substation or switchgear or the personnel entering the substation or switchgear and thus leads to substation shut down.

There is a need to address this issue.

### SUMMARY OF THE INVENTION

Therefore, it would be advantageous to have means more easily to check switchgear functioning and more easily to perform maintenance tasks The object of the present invention is solved with the subject matter of the independent claim 1, wherein further embodiments are incorporated in the dependent claims.

### BRIEF DESCRIPTION OF THE DRAWINGS

Exemplary embodiments will be described in the following with reference to the following drawings:
Fig. 1 shows an example of a switchgear;
Fig. 2 shows an example of a switchgear;
Fig. 3 shows an example of a switchgear; and
Fig. 4 shows an example of a switchgear.

### DETAILED DESCRIPTION OF EMBODIMENTS

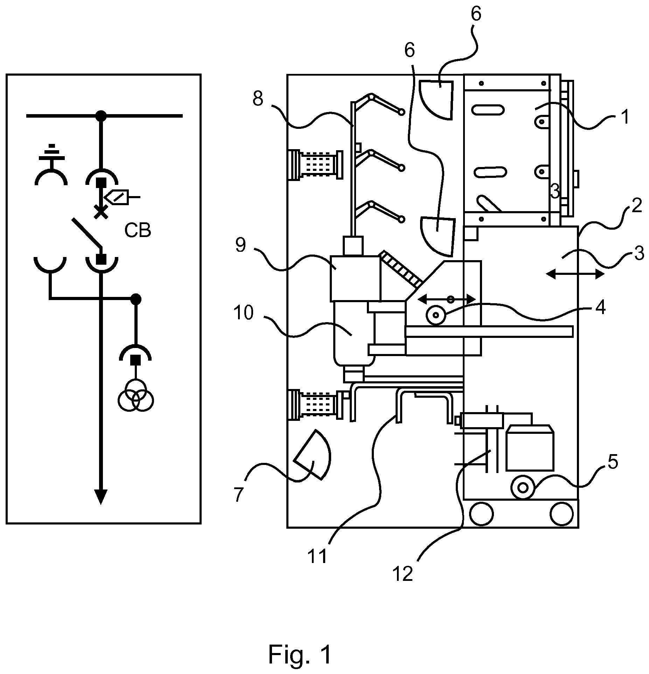

Figs. 1-4 show examples of a switchgear for operation in a low voltage, medium voltage or high voltage substation.

One example relates to a switchgear. The switchgear comprises at least one first compartment 2, 2a, a second compartment 1, a feeder module 3, a main drive 5, a plurality of main switchgear components, a plurality of auxiliary switchgear components, and at least one sensor 6, 7. The plurality of main switchgear components comprises a main busbar system 8, a circuit breaker 10, and at least a first part of a cable connection 11. The plurality of main switchgear components are configured to be housed in the at least one first compartment. The plurality of auxiliary switchgear components are configured to be housed in the second compartment. One or more of the at least one sensor is configured to be located in the at least one first compartment. The at least one sensor is configured to monitor the components in the at least one first compartment. The circuit breaker is associated with the feeder module. This association means that the circuit breaker can be moved out of the switchgear through movement of the feeder module, as discussed in more detail below. Thus, the feeder module is configured to be removed from the switchgear. Removal of the feeder module is configured to remove the circuit breaker from the switchgear.

The main drive is configured to move the feeder module to remove the feeder module from the switchgear.

According to an example, the plurality of main switchgear components comprises a current transformer or sensor 9.

According to an example, the main drive is configured to move the feeder module to remove the feeder module from the switchgear on the basis of sensor data acquired by one or more sensor of the at least one sensor.

According to an example, one or more of the plurality of main switchgear components in addition to the circuit breaker is associated with the feeder module. Removal of the feeder module is configured to remove the one or more of the plurality of main switchgear components in addition to the circuit breaker from the switchgear. Thus for example, the current transformer or sensor 9 in addition to the circuit breaker 10 can be easily removed from the switchgear.

According to an example, the second compartment is associated with the feeder module. Removal of the feeder module is configured to remove the second compartment from the switchgear.

According to an example, removal of the second compartment from the switchgear is configured to remove the plurality of auxiliary switchgear components from the switchgear.

According to an example, one or more of the at least one sensor is associated with the feeder module. Removal of the feeder module is configured to remove the one or more of the at least one sensor from the switchgear.

According to an example, one or more of the at least one sensor is located in the second compartment.

According to an example, the main drive or a secondary drive 4 is configured to rack the circuit breaker between connected, disconnected and earthed positions.

According to an example, the main drive or secondary drive is configured to rack the circuit breaker from the connected position to the disconnected position, and then rack the circuit breaker from the disconnected position to the earthed position. This is done prior to movement of the feeder module by the main drive to remove the feeder module from the switchgear.

According to an example, when the feeder module is removed from the switchgear, the main drive is configured to move the feeder module or a new module to insert the feeder module or new feeder module into the switchgear.

According to an example, the circuit breaker or a new circuit breaker is associated with the new module. Insertion of the feeder module or new module into the switchgear is configured to insert the circuit breaker or new circuit breaker into the switchgear.

According to an example, the main drive or secondary drive is configured to rack the circuit breaker or new circuit breaker from an earthed position to a disconnected position, and then rack the circuit breaker from the disconnected position to a connected position. This is done after the movement of the feeder module or new module by the main drive to insert the feeder module or new module in the switchgear.

According to an example, the main drive is internal to or embedded in the feeder module.

According to an example, when the feeder module is removed from the switchgear, the main drive is configured to move a dummy module equipped with a primary drive to insert the dummy module into the switchgear.

According to an example, the at least one first compartment comprises a plurality of first compartments 2, 2a. One compartment of the plurality of first compartments is a cable connection compartment 2a within which is housed a second part of the cable connection and a voltage sensor and a current sensor. The circuit breaker is configured to be housed in a first compartment 2 other than the cable connection compartment.

According to an example, the plurality of auxiliary switchgear components comprises a circuit breaker drive 10).

According to an example, the at least one first compartment is arc proof.

According to an example, at least one compartment of the at least one first compartment is open-sided.

According to an example, at least one compartment comprises at least one door or removable wall section.

According to an example, the switchgear is provided with one or more interlocks. The one or more interlocks are configured to prevent an incorrect sequence of operation and configured to prevent unauthorized access to one or more compartments of the switchgear.

According to an example, the one or more interlocks are configured to provide mechanical interlocking by moveable mechanical parts.

According to an example, the one or more interlocks are configured to be provided with sensor data from the at least one sensor.

According to an example, the one or more interlocks are configured to operate on the basis of visual data.

According to an example, one or more walls of the compartments of the switchgear are metallic.

In an example, the metallic walls are configured to provide inner housing segregation in order to achieve the required service continuity level.

One example shown in figures 1-4 relates to a switchgear. The switchgear comprises at least one first compartment 2, 2a, a second compartment 1, a plurality of main switchgear components, a plurality of auxiliary switchgear components, and at least one sensor 6, 7. The plurality of main switchgear components comprises a main busbar system 8, a current transformer or sensor 9, a circuit breaker 10, and at least a first part of a cable connection 11. The plurality of main switchgear components are configured to be housed in the at least one first compartment in proximity to at least one wall of an outer housing of the at least one first compartment. The plurality of auxiliary switchgear components are configured to be housed in the second compartment. One or more of the at least one sensor is configured to be located in the at least one first compartment. The at least one sensor is configured to monitor the components in the at least one first compartment.

In an example, the plurality of main switchgear components comprises a current transformer or sensor 9.

In an example, one or more of the at least one sensor is located in the second compartment.

In an example, the at least one first compartment comprises a plurality of first compartments 2, 2a. One compartment of the plurality of first compartments is a cable connection compartment 2a within which is housed a second part of the cable connection and a voltage sensor and a current sensor. The circuit breaker is configured to be housed in a first compartment 2 other than the cable connection compartment.

In an example, the plurality of auxiliary switchgear components comprises a circuit breaker drive 10.

In an example, the at least one first compartment is arc proof.

In an example, at least one compartment of the at least one first compartment is open-sided.

In an example, at least one compartment comprises at least one door or removable wall section.

In an example, the switchgear is provided with one or more interlocks, wherein the one or more interlocks are configured to prevent an incorrect sequence of operation and configured to prevent unauthorized access to one or more compartments of the switchgear.

In an example, the one or more interlocks are configured to provide mechanical interlocking by moveable mechanical parts.

In an example, the one or more interlocks are configured to be provided with sensor data from the at least one sensor.

In an example, the one or more interlocks are configured to operate on the basis of visual data.

In an example, one or more walls of the compartments of the switchgear are metallic.

In an example, the metallic walls are configured to provide inner housing segregation in order to achieve the required service continuity level.

Thus, a new substation development is provided that enables autonomous operation, i.e. with minimum personnel interaction required within an internal space of the substation. This is provided through remote control motorized operation for key components to allow for their operational status transitions or removal from a switchgear or provided through appropriate location of those key components, and provided together with a sensor based monitoring system. In other words, a non-robotic solution for a substation is provided, which can be used either on a whole substation or on some of its parts.

Continuing with the figures, specific features are now described. Accurate and detailed monitoring of components is provided such that their technical status and/or detection of faults is possible. This enables malfunctions to be detected early before they develop into major breakdown and located much more precisely and quickly compared to current best practice.

Fig. 1 shows a detailed example of a switchgear, where for ease of reference the following features shown are listed:
1. Low-voltage compartment with auxiliary circuits;
2. Arc proof enclosure;
3. Main withdrawable feeder module;
4. Secondary drive for racking the circuit breaker between connected/disconnected/earthed positions;
5. Main drive of the withdrawable feeder module;
6. and 7. Sensors for monitoring;
8. Main busbars;
9. Current transformer or sensor;
10. Circuit breaker;
11. Cable connections;
12. Voltage transformers or sensors that are part of the main withdrawable feeder module.

Continuing with Fig. 1, the substation layout in terms of the switchgear has been changed, with appropriate placement of sensors such that they can see and/or monitor or point of interest required for proper monitoring of the components of the substation/switchgear/control gear. In this way, a robotic system that is required to move around with sensors is not required. The sensors in the current solution are fixed in position.

However, there was also still a need for maintenance or replacement of at least the components most critical for substation/switchgear operation. This is achieved either by the critical parts being automatically moved out of the substation/switchgear into an area of easy and safe access for personnel, or by rearranging substation/switchgear layout such that personnel can perform required tasks from outside, without the need to enter the inner space of the substation.

Thus, as shown in Fig. 1 the critical part or parts of a substation/switchgear are grouped on a withdrawable feeder module, that is specific for each feeder from the main node of the main busbars. There can betwo drives on the withdrawable module:
1. A main drive that is able to move the whole module in or out of the substation/switchgear;
2. A secondary drive that serve for the circuit breaker racking between connected, disconnected and earthed positions.

However, the main drive and secondary drive can be one common drive performing both the tasks.

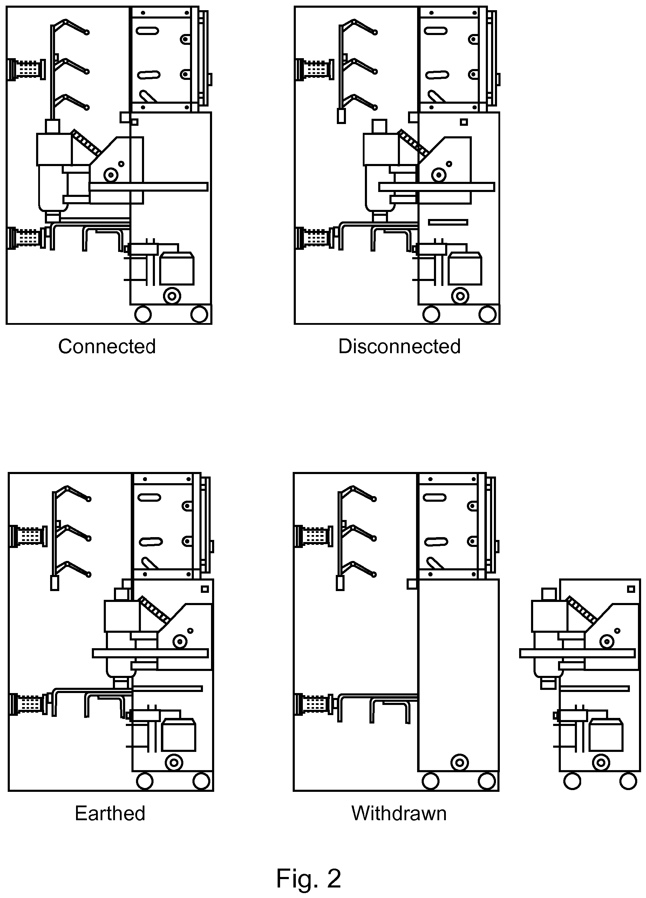

Fig. 2 shows the different operating statuses for the system described here. In the first image, the circuit breaker of the switchgear is in a connected state. The main drive (or secondary drive) then racks the circuit breaker to a disconnected state as shown in the next image. The main drive (or secondary drive) then racks the circuit breaker to an earthed state, as shown in the next image. In the next image the main drive has withdrawn the feeder module along with the circuit breaker and current transformer or sensor from the switchgear.

To ensure the arc resistance of the outer enclosure when the feeder module is withdrawn from the switchgear, a dummy module equipped with primary drive only can be used. Thus, the withdrawn module is accessible for human maintainers while the continuous operation for the switchgear is ensured.

As shown in Fig. 1 the main drive responsible for withdrawing the feeder module is internal.

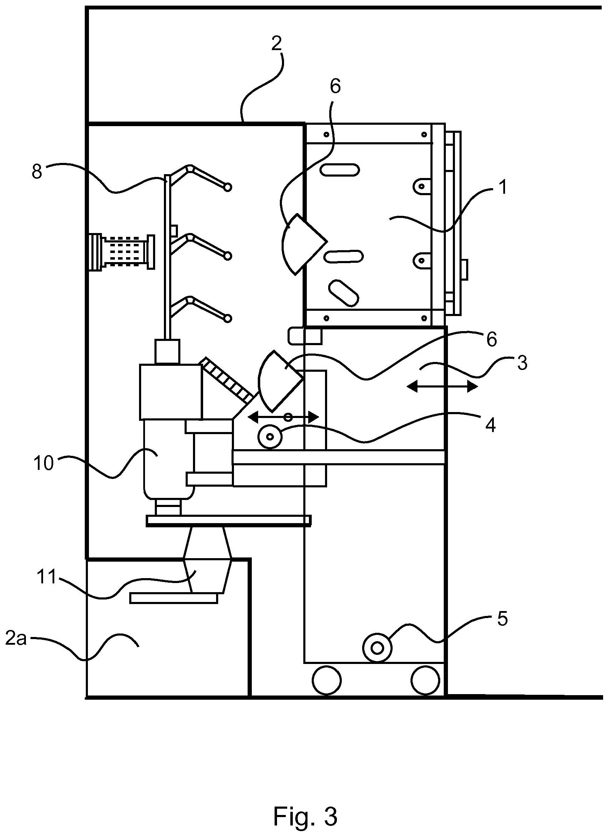

Fig. 3 shows a detailed example of a switchgear, where for ease of reference the following features shown are listed:
1. Low-voltage compartment with auxiliary circuits;
2. Arc proof enclosure;
2a. Cable connection box, accessible for operators by removing a cover shown at the bottom left corner;
3. Main withdrawable feeder module;
4. Secondary drive for racking the circuit breaker between connected/disconnected/earthed positions;
5. Main drive of the withdrawable feeder module;
8. Main busbars;
10. Circuit breaker;
11. Bushings as part of cable connections including current and voltage sensors.

As shown in Fig. 3 a cable connection compartment 2a can be provided, which is segregated from the rest of the switchgear space to allow safe access to cable connections for the human operators, whilst the switchgear is in operation. Access to the cable connection compartment 2a is via a removable panel or one or more doors shown in the bottom left-hand corner of Fig. 3. Also as shown, at least one of the sensors can be part of the withdrawable module in order to make replacement of the sensor more convenient in case of failure.

The bushing in Fig.3 indicate that the current and voltage sensors can be embedded inside the bushing. However, the current and voltage sensors can be kept as stand alone devices located in the cable compartment.

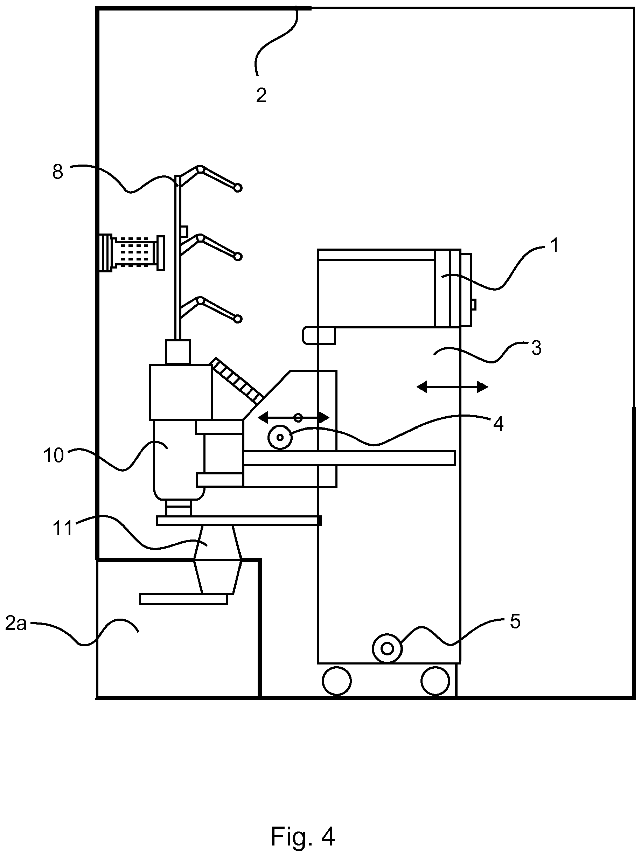

Fig. 4 shows a detailed example of a switchgear, where for ease of reference the following features shown are listed:
1. Low-voltage compartment with auxiliary circuits;
2. Arc proof enclosure that offers space for movable monitoring sensors on automation system.
2a. Cable connection box, accessible for operators by removing a cover shown at the bottom left corner;
3. Main withdrawable feeder module;
4. Secondary drive for racking the circuit breaker between connected/disconnected/earthed positions;
5. Main drive of the withdrawable feeder module;
8. Main busbars;
10. Circuit breaker;
11. Bushings as part of cable connections including current and voltage sensors.

As shown in Fig. 4, the low-voltage compartment 1 can be part of the withdrawable feeder module, enabling the auxiliary components to be easily maintained. Also, at least one of the sensors can be part of the low-voltage compartment but still monitoring the arc proof enclosure and the components contained therein, but also enabling this sensor to be easily replaced if necessary. Also, the switchgear can be designed as unmanned by removing part of the arc proof enclosure allowing automation system to perform the condition monitoring instead of fixed sensors. Thus, in such a situation a part of the enclosure, for example that shown in a thin line in Fig. 4, can be removed.

The at least one sensor 6, 7 can include at least one camera, linked to an image recognition system.

In an example, the image recognition system is configured to evaluate actual images with adaptive image data, in order to be able to locate and to analyse physical reasons for faults or deterioration of components that might lead to faults.

In an example, the camera is provided with a video mode. In this way functional surveillance can be taken by slow motion video sequences. Thus, the image recognition system is configured to automatically the slow motion video sequences with regular expected function sequences through comparison of the slow motion video sequences from an adaptive data field, which show the expected regular function. The at least one sensor 6, 7 can include a temperature sensing system and/or a temperature recognition system.

The at least one sensor 6, 7 can include an environmental sensing system configured to sense humidity, moisture or pressure, linked to an environment recognition system.

The at least one sensor 6, 7 can include a surface contamination sensing system and/or a surface contamination recognition system that can utilize other sensed quantities.

The at least one sensor 6, 7 can include an electrical discharge sensing system and/or an electrical discharge recognition system that can utilize other sensed quantities. The at least one sensor 6, 7 is configured to communicate via a data network or an external data communication interface.

The main switchgear components can also comprise one or more of:
an earthing switch, voltage indication, surge arrestor, UFES, IS-limitor, contactor, load-break switch, and fuse.

## Claims

1. A switchgear, comprising:
- at least one first compartment (2, 2a);
- a second compartment (1);
- a feeder module (3);
- a main drive (5);
- a plurality of main switchgear components;
- a plurality of auxiliary switchgear components; and
- at least one sensor (6, 7);
wherein the at least one first compartment comprises an arc proof enclosure (2) and a cable connection compartment (2a) within which is housed a second part of a cable connection and a voltage sensor and a current sensor,
wherein the plurality of main switchgear components comprises a main busbar system (8), a circuit breaker (10), and at least a first part of a cable connection (11);
wherein, the plurality of main switchgear components are configured to be housed in the at least one first compartment;
wherein, the plurality of auxiliary switchgear components are configured to be housed in the second compartment;
wherein the circuit breaker is configured to be housed in the arc proof enclosure, and wherein the arc proof enclosure (2) and the cable connection compartment (2a) each comprise a door or removable wall section;
wherein, one or more of the at least one sensor is configured to be located in the at least one first compartment, and wherein the at least one sensor is configured to monitor the components in the at least one first compartment;
wherein, the circuit breaker is associated with the feeder module;
wherein, the feeder module is configured to be removed from the switchgear;
wherein removal of the feeder module is configured to remove the circuit breaker from the switchgear;
wherein the main drive is configured to move the feeder module to remove the feeder module from the switchgear on the basis of sensor data acquired by one or more sensor of the at least one sensor, and wherein the main drive is internal to or embedded in the feeder module;
wherein when the feeder module is removed from the switchgear, the main drive is configured to move the feeder module to insert the feeder module into the switchgear and wherein insertion of the feeder module is configured to insert the circuit breaker into the switchgear;
wherein a secondary drive (4) is configured to rack the circuit breaker between connected, disconnected and earthed positions, wherein the secondary drive is configured to rack the circuit breaker from the connected position to the disconnected position, and then rack the circuit breaker from the disconnected position to the earthed position prior to movement of the feeder module by the main drive to remove the feeder module from the switchgear, and wherein the secondary drive is configured to rack the circuit breaker from an earthed position to a disconnected position, and then rack the circuit breaker from the disconnected position to a connected position after the movement of the feeder module by the main drive to insert the feeder module in the switchgear; and
wherein the second compartment is associated with the feeder module, and wherein removal of the feeder module is configured to remove the second compartment from the switchgear, and wherein removal of the second compartment from the switchgear is configured to remove the plurality of auxiliary switchgear components from the switchgear,
wherein the main drive (5) and the secondary drive (4) can be one common drive performing both the tasks of moving the feeder module in or out of the switchgear and racking the circuit breaker.

2. Switchgear according to claim 1, wherein the plurality of main switchgear components comprises a current transformer or sensor (9).

3. Switchgear according to any of claims 1-2, wherein one or more of the plurality of main switchgear components in addition to the circuit breaker is associated with the feeder module, and wherein removal of the feeder module is configured to remove the one or more of the plurality of main switchgear components in addition to the circuit breaker from the switchgear.

4. Switchgear according to any of claims 1-3, wherein one or more of the at least one sensor is associated with the feeder module, and wherein removal of the feeder module is configured to remove the one or more of the at least one sensor from the switchgear.

5. Switchgear according to any of claims 1-4, wherein one or more of the at least one sensor is located in the second compartment.

6. Switchgear according to any of claims 1-5, wherein when the feeder module is removed from the switchgear, the main drive is configured to move a dummy module equipped with a primary drive to insert the dummy module into the switchgear.

7. Switchgear according to any of claims 1-6, wherein, the plurality of auxiliary switchgear components comprises a circuit breaker drive (10);

8. Switchgear according to any of claims 1-7, wherein at least one compartment of the at least one first compartment is open-sided.

9. Switchgear according to any of claims 1-8, wherein the switchgear is provided with one or more interlocks, wherein the one or more interlocks are configured to prevent an incorrect sequence of operation and configured to prevent unauthorized access to one or more compartments of the switchgear.

10. Switchgear according to claim 9, wherein the one or more interlocks are configured to provide mechanical interlocking by moveable mechanical parts.

11. Switchgear according to any of claims 9-10, wherein the one or more interlocks are configured to be provided with sensor data from the at least one sensor.

12. Switchgear according to claim 11, wherein the one or more interlocks are configured to operate on the basis of visual data.

13. Switchgear according to any of claims 1-12, wherein one or more walls of the compartments of the switchgear are metallic.

## Patentansprüche

1. Schaltanlage, umfassend:
- mindestens ein erstes Fach (2, 2a);
- ein zweites Fach (1);
- ein Einzugsmodul (3);
- einen Hauptantrieb (5);
- eine Vielzahl von Hauptschaltanlagenkomponenten;
- eine Vielzahl von Hilfsschaltanlagenkomponenten; und
- mindestens einen Sensor (6, 7);
wobei das mindestens eine erste Fach ein lichtbogenfestes Gehäuse (2) und ein Kabelanschlussfach (2a) umfasst, in dem ein zweiter Teil eines Kabelanschlusses sowie ein Spannungssensor und ein Stromsensor untergebracht sind,
wobei die Vielzahl von Hauptschaltanlagenkomponenten ein Hauptsammelschienensystem (8), einen Leistungsschalter (10) und mindestens einen ersten Teil eines Kabelanschlusses (11) umfassen;
wobei die Vielzahl von Hauptschaltanlagenkomponenten so ausgelegt sind, dass sie in dem mindestens einen ersten Fach untergebracht werden können;
wobei die Vielzahl von Hilfsschaltanlagenkomponenten so ausgelegt sind, dass sie in dem zweiten Fach untergebracht werden können;
wobei der Leistungsschalter so ausgelegt ist, dass er in dem lichtbogensicheren Gehäuse untergebracht werden kann, und wobei das lichtbogensichere Gehäuse (2) und das Kabelanschlussfach (2a) jeweils eine Tür oder einen abnehmbaren Wandabschnitt umfassen;
wobei einer oder mehrere des mindestens einen Sensors dazu ausgelegt sind, sich in dem mindestens einen ersten Fach zu befinden, und wobei der mindestens eine Sensor dazu ausgelegt ist, die Komponenten in dem mindestens einen ersten Fach zu überwachen;
wobei der Leistungsschalter dem Einzugsmodul zugeordnet ist;
wobei das Einzugsmodul so ausgelegt ist, dass es von der Schaltanlage entfernt werden kann;
wobei das Entfernen des Einzugsmoduls dazu ausgelegt ist, den Leistungsschalter aus der Schaltanlage zu entfernen;
wobei der Hauptantrieb dazu ausgelegt ist, das Einzugsmodul zu bewegen, um das Einzugsmodul basierend auf Sensordaten, die durch einen oder mehrere Sensoren des mindestens einen Sensors erfasst werden, von der Schaltanlage zu entfernen, und
wobei der Hauptantrieb in das Einzugsmodul eingebaut oder darin eingebettet ist;
wobei, wenn das Einzugsmodul aus der Schaltanlage entfernt ist, der Hauptantrieb dazu ausgelegt ist, das Einzugsmodul zu bewegen, um das Einzugsmodul in die Schaltanlage einzusetzen, und wobei das Einsetzen des Einzugsmoduls dazu ausgelegt ist, den Leistungsschalter in die Schaltanlage einzusetzen;
wobei ein Sekundärantrieb (4) dazu ausgelegt ist, den Leistungsschalter zwischen einer angeschlossenen, einer getrennten und einer geerdeten Position einzuschieben, wobei der Sekundärantrieb dazu ausgelegt ist, den Leistungsschalter aus der angeschlossenen Position in die getrennte Position einzuschieben und dann den Leistungsschalter aus der getrennten Position in die geerdete Position einzuschieben, bevor das Einzugsmodul durch den Hauptantrieb bewegt wird, um das Einzugsmodul aus der Schaltanlage zu entfernen, wobei der Sekundärantrieb dazu ausgelegt ist, den Leistungsschalter aus einer geerdeten Position in eine getrennte Position einzuschieben und dann den Leistungsschalter aus der getrennten Position in eine angeschlossene Position einzuschieben, nachdem das Einzugsmodul durch den Hauptantrieb bewegt wurde, um das Einzugsmodul in die Schaltanlage einzusetzen; und
wobei das zweite Fach dem Einzugsmodul zugeordnet ist, und wobei das Entfernen des Einzugsmoduls dazu ausgelegt ist, das zweite Fach aus der Schaltanlage zu entfernen, und wobei das Entfernen des zweiten Fachs aus der Schaltanlage dazu ausgelegt ist, die Vielzahl von Hilfsschaltanlagenkomponenten aus der Schaltanlage zu entfernen,
wobei der Hauptantrieb (5) und der Sekundärantrieb (4) ein gemeinsamer Antrieb sein kann, der sowohl die Aufgabe des Bewegens des Einzugsmoduls in oder aus der Schaltanlage als auch des Einschiebens des Leistungsschalters durchführt.

2. Schaltanlage gemäß Anspruch 1, wobei die Vielzahl der Hauptschaltanlagenkomponenten einen Stromtransformator oder -sensor (9) umfasst.

3. Schaltanlage gemäß einem der Ansprüche 1-2, wobei eine oder mehrere der Vielzahl von Hauptschaltanlagenkomponenten zusätzlich zum Leistungsschalter dem Einzugsmodul zugeordnet sind und wobei das Entfernen des Einzugsmoduls dazu ausgelegt ist, die eine oder mehreren der Vielzahl von Hauptschaltanlagenkomponenten zusätzlich zum Leistungsschalter aus der Schaltanlage zu entfernen.

4. Schaltanlage gemäß einem der Ansprüche 1-3, wobei ein oder mehrere des mindestens einen Sensors dem Einzugsmodul zugeordnet sind und wobei das Entfernen des Einzugsmoduls dazu ausgelegt ist, den einen oder die mehreren des mindestens einen Sensors aus der Schaltanlage zu entfernen.

5. Schaltanlage gemäß einem der Ansprüche 1-4, wobei sich ein oder mehrere des mindestens einen Sensors im zweiten Fach befinden.

6. Schaltanlage gemäß einem der Ansprüche 1-5, wobei der Hauptantrieb dazu ausgelegt ist, beim Entfernen des Einzugsmoduls aus der Schaltanlage ein mit einem Primärantrieb ausgestattetes Platzhaltermodul zu bewegen, um das Platzhaltermodul in die Schaltanlage einzusetzen.

7. Schaltanlage gemäß einem der Ansprüche 1-6, wobei die Vielzahl von Hilfsschaltanlagenkomponenten einen Leistungsschalterantrieb (10) umfasst.

8. Schaltanlage gemäß einem der Ansprüche 1-7, wobei mindestens ein Fach des mindestens einen ersten Fachs eine offene Seite aufweist.

9. Schaltanlage gemäß einem der Ansprüche 1-8, wobei die Schaltanlage mit einer oder mehreren Verriegelungen versehen ist, wobei die eine oder die mehreren Verriegelungen dazu ausgelegt sind, eine falsche Betriebsabfolge zu verhindern, und dazu ausgelegt sind, einen unbefugten Zugang zu einem oder mehreren Fächern der Schaltanlage zu verhindern.

10. Schaltanlage gemäß Anspruch 9, wobei die eine oder mehreren Verriegelungen dazu ausgelegt sind, eine mechanische Verriegelung durch bewegbare mechanische Teile zu ermöglichen.

11. Schaltanlage gemäß einem der Ansprüche 9-10, wobei die eine oder die mehreren Verriegelungen dazu ausgelegt sind, mit Sensordaten aus dem mindestens einen Sensor versorgt zu werden.

12. Schaltanlage gemäß Anspruch 11, wobei die eine oder mehreren Verriegelungen dazu ausgelegt sind, basierend auf visuellen Daten zu arbeiten.

13. Schaltanlage gemäß einem der Ansprüche 1-12, wobei eine oder mehrere Wände der Fächer der Schaltanlage aus Metall sind.

## Revendications

1. Installation de commutation comprenant :
au moins un premier compartiment (2, 2a) ;
un second compartiment (1) ;
un module d'alimentation (3) ;
un dispositif d'entraînement principal (5) ;
une pluralité de composants d'installation de commutation principaux ;
une pluralité de composants d'installation de commutation auxiliaires ; et
au moins un capteur (6, 7) ;
l'au moins un premier compartiment comprenant une enceinte à l'épreuve des arcs (2) et un compartiment de connexion de câble (2a) dans lequel est logée une seconde partie d'une connexion de câble ainsi qu'un capteur de tension et un capteur de courant,
la pluralité de composants d'installation de commutation principaux comprenant un système de barre omnibus principal (8), un disjoncteur (10) et au moins une première partie d'une connexion de câble (11) ;
la pluralité de composants d'installation de commutation principaux étant conçue pour être logée dans l'au moins un premier compartiment ;
la pluralité de composants d'installation de commutation auxiliaires étant conçue pour être logée dans le second compartiment ;
le disjoncteur étant conçu pour être logé dans l'enceinte à l'épreuve des arcs, et l'enceinte à l'épreuve des arcs (2) et le compartiment de connexion de câble (2a) comprenant chacun une porte ou une section de paroi amovible ;
un ou plusieurs capteurs parmi l'au moins un capteur étant conçus pour être situés dans l'au moins un premier compartiment, et l'au moins un capteur étant conçu pour surveiller les composants dans l'au moins un premier compartiment ;
le disjoncteur étant associé au module d'alimentation ;
le module d'alimentation étant conçu pour être retiré de l'installation de commutation ;
le retrait du module d'alimentation étant conçu pour retirer le disjoncteur de l'installation de commutation ;
le dispositif d'entraînement principal étant conçu pour déplacer le module d'alimentation pour retirer le module d'alimentation de l'installation de commutation sur la base des données de capteur acquises par un ou plusieurs capteurs parmi l'au moins un capteur, et
le dispositif d'entraînement principal étant interne ou intégré au module d'alimentation ;
lorsque le module d'alimentation est retiré de l'installation de commutation, le dispositif d'entraînement principal étant conçu pour déplacer le module d'alimentation afin d'insérer le module d'alimentation dans l'installation de commutation, et l'insertion du module d'alimentation étant conçue pour insérer le disjoncteur dans l'installation de commutation ;
un dispositif d'entraînement secondaire (4) étant conçu pour déplacer le disjoncteur entre les positions connectée, déconnectée et mise à la terre, le dispositif d'entraînement secondaire étant conçu pour déplacer le disjoncteur de la position connectée à la position déconnectée, puis déplacer le disjoncteur de la position déconnectée à la position mise à la terre avant le déplacement du module d'alimentation par le dispositif d'entraînement principal pour retirer le module d'alimentation de l'installation de commutation, et le dispositif d'entraînement secondaire étant conçu pour déplacer le disjoncteur d'une position mise à la terre à une position déconnectée, puis pour déplacer le disjoncteur de la position déconnectée à une position connectée après le déplacement du module d'alimentation par le dispositif d'entraînement principal pour insérer le module d'alimentation dans l'installation de commutation ; et
le second compartiment étant associé au module d'alimentation, et le retrait du module d'alimentation étant conçu pour retirer le second compartiment de l'installation de commutation, et le retrait du second compartiment de l'installation de commutation étant conçu pour retirer la pluralité de composants d'installation de commutation auxiliaires de l'installation de commutation, le dispositif d'entraînement principal (5) et le dispositif d'entraînement secondaire (4) pouvant être un dispositif d'entraînement commun effectuant à la fois les tâches de déplacement du module d'alimentation dans ou hors de l'installation de commutation et de déplacement du disjoncteur.

2. Installation de commutation selon la revendication 1, la pluralité de composants d'installation de commutation principaux comprenant un capteur ou transformateur de courant (9).

3. Installation de commutation selon l'une quelconque des revendications 1 et 2, un ou plusieurs composants de la pluralité de composants d'installation de commutation principaux, en plus du disjoncteur, étant associés au module d'alimentation, et le retrait du module d'alimentation étant conçu pour retirer de l'installation de commutation le ou les composants de la pluralité de composants d'installation de commutation principaux, en plus du disjoncteur.

4. Installation de commutation selon l'une quelconque des revendications 1 à 3, un ou plusieurs capteurs parmi l'au moins un capteur étant associés au module d'alimentation, et le retrait du module d'alimentation étant conçu pour retirer le ou les capteurs parmi l'au moins un capteur de l'installation de commutation.

5. Installation de commutation selon l'une quelconque des revendications 1 à 4, un ou plusieurs capteurs parmi l'au moins un capteur étant situés dans le second compartiment.

6. Installation de commutation selon l'une quelconque des revendications 1 à 5, lorsque le module d'alimentation est retiré de l'installation de commutation, le dispositif d'entraînement principal étant conçu pour déplacer un module fictif équipé d'un dispositif d'entraînement primaire afin d'insérer le module fictif dans l'installation de commutation.

7. Installation de commutation selon l'une quelconque des revendications 1 à 6, la pluralité de composants d'installation de commutation auxiliaires comprenant un dispositif d'entraînement de disjoncteur (10).

8. Installation de commutation selon l'une quelconque des revendications 1 à 7, au moins un compartiment parmi l'au moins un premier compartiment étant ouvert.

9. Installation de commutation selon l'une quelconque des revendications 1 à 8, l'installation de commutation étant équipés d'un ou de plusieurs verrouillages, le ou les verrouillages étant conçus pour empêcher une séquence de fonctionnement incorrecte et pour empêcher l'accès non autorisé à un ou plusieurs compartiments de l'installation de commutation.

10. Installation de commutation selon la revendication 9, le ou les verrouillages étant conçus pour fournir un verrouillage mécanique par des pièces mécaniques mobiles.

11. Installation de commutation selon l'une quelconque des revendications 9 à 10, le ou les verrouillages étant conçus pour recevoir des données de capteur provenant de l'au moins un capteur.

12. Installation de commutation selon la revendication 11, le ou les verrouillages étant conçus pour fonctionner sur la base de données visuelles.

13. Installation de commutation selon l'une quelconque des revendications 1 à 12, une ou plusieurs parois des compartiments de l'installation de commutation étant métalliques.
